# EUROPÄISCHE PATENTSCHRIFT

(11) **EP 3 509 906 B1**
(45) Veröffentlichungstag und Bekanntmachung des Hinweises auf die Patenterteilung: **17.02.2021**
(21) Anmeldenummer: 17762124.0
(22) Anmeldetag: 07.09.2017
(51) Int. Cl.: B60N 2/90

(54) **VERFAHREN ZUR ANSTEUERUNG VON MASSAGEEINHEITEN EINER IN EINEM SITZ ANGEORDNETEN MASSAGEVORRICHTUNG, SITZANORDNUNG FÜR EIN ODER IN EINEM FAHRZEUG**
METHOD FOR CONTROLLING MASSAGE UNITS OF A MASSAGE APPARATUS ARRANGED IN A SEAT, SEAT ARRANGEMENT FOR A VEHICLE OR IN A VEHICLE
PROCÉDÉ POUR COMMANDER DES UNITÉS DE MASSAGE D'UN DISPOSITIF DE MASSAGE PLACÉ DANS UN SIÈGE, ENSEMBLE SIÈGE POUR UN VÉHICULE OU DANS UN VÉHICULE

(30) Priorität: 08.09.2016 DE 102016217124
(43) Veröffentlichungstag der Anmeldung: 17.07.2019
(73) Patentinhaber: Brose Fahrzeugteile SE & Co. Kommanditgesellschaft, Coburg, 96450 Coburg (DE)
(72) Erfinder: MERGL, Christian, 97475 Zeil/Main (DE); KRÖNER, Gregor, 96120 Bischberg (DE)
(74) Vertreter: 2K Patentanwälte Blasberg Kewitz & Reichel
(86) Internationale Anmeldenummer: PCT/EP2017/072445
(87) Internationale Veröffentlichungsnummer: WO 2018/046588

(56) Entgegenhaltungen:
- DE-A1-102007 036 987
- DE-A1-102015 109 067
- KR-A- 20120 136 173

## Beschreibung

### GEBIET DER ERFINDUNG

Die vorliegende Erfindung betrifft ein Verfahren zur Ansteuerung von Massageeinheiten einer in einem Sitz angeordneten Massagevorrichtung sowie eine Sitzanordnung für ein oder in einem Fahrzeug.

### TECHNISCHER HINTERGRUND

Zur Ansteuerung von Massageeinheiten in einem Sitz existieren Verfahren, die ein Ein- und Ausschalten oder das Abspielen eines fest vorgegebenen Programmablaufs vorsehen.

Die DE 297 05530 U1 beschreibt einen Fahrzeugsitz, bei dem Schwingköpfe integriert sind, deren Antriebsfrequenz durch entsprechende Benutzereingabe in unterschiedlichen Stufen oder stufenlos einstellbar ist. Eine derartige Steuerung stellt jedoch lediglich monotone Massageabläufe bereit.

Die DE 43 31 663 C1 beschreibt eine die positionsverstellenden und die konturverstellenden Mittel eines Fahrzeugsitzes gemeinsam ansteuernde Steuerungseinrichtung. Diese weist eine Speichereinheit auf, in der Ansteuerprogramme für diese Mittel speicherbar sind. Die Konturverstellmittel werden gleichzeitig gemeinsam von der Steuerungseinrichtung in einer vorbestimmbaren zeitlichen Abfolge zur Bewirkung eines Massage- und Gymnastikprogramms aktiviert. Nachteilig sind derartige Programme einem Benutzer relativ schnell bekannt.

Aktuell gibt es Bestrebungen, Massagesysteme in einem Fahrzeug mit anderen Fahrzeugsystemen zur Verbesserung einer Fahrererfahrung zu koppeln. Ein derartiges Konzept ist beispielsweise in der DE 10 2015 109067 A1 beschrieben. Hierbei wird Vibration des Massagesystems eines Fahrzeugsitzes zur Musikverstärkung, zur Kraftmaschinenverstärkung oder zur Situationswarnung eingesetzt. Bei derartigen Systemen wird die Vibration daher stets zur Verstärkung eines Reizes eingesetzt, was eine Vielzahl starker auf einen Fahrzeugführer wirkenden Reize zur Folge haben kann.

KR 2012 0136173 A offenbart einen weiteren Fahrzeugsitz aus dem Stand der Technik.

### ZUSAMMENFASSUNG DER ERFINDUNG

Vor diesem Hintergrund liegt der vorliegenden Erfindung die Aufgabe zugrunde, ein verbessertes Verfahren zur Ansteuerung von Massageeinheiten einer in einem Sitz angeordneten Massagevorrichtung sowie eine Sitzanordnung für ein oder in einem Fahrzeug anzugeben.

Erfindungsgemäß wird diese Aufgabe durch ein Verfahren mit den Merkmalen des Patentanspruchs 1 und/oder durch eine Sitzanordnung mit den Merkmalen des Patentanspruchs 14 gelöst.

Demgemäß ist vorgesehen:
- Ein Verfahren zur Ansteuerung von Massageeinheiten einer in einem Sitz angeordneten Massagevorrichtung in einem Fahrzeug zur Massage eines Insassen, mit den folgenden Verfahrensschritten: Steuern von in den Sitz integrierten Massageeinheiten basierend auf einem Audio-Unterhaltungssignal; und Verändern einer Intensität der auf dem Unterhaltungssignal basierenden durch die Massageeinheiten bereitgestellten Massage angepasst an aktuelle Betriebsinformationen des Fahrzeugs, welche das Auftreten einer für einen Fahrzeugführer potentiell mental beanspruchenden oder müdigkeitsfördernden Situation erkennen lassen.
- Eine Sitzanordnung für ein oder in einem Fahrzeug, insbesondere zur Durchführung eines Verfahrens gemäß einem der vorstehenden Ansprüche, mit einem Sitz, welcher eine Anzahl von integrierten Massageeinheiten zur Massage eines Insassen aufweist, wobei eine Vorrichtung oder eine Anschlussstelle vorgesehen ist, über welche die Massageeinheiten basierend auf einem Audio-Unterhaltungssignal ansteuerbar sind, wobei angepasst an aktuelle Betriebsinformationen eines Fahrzeugs, welche das Auftreten einer für einen Fahrzeugführer potentiell mental beanspruchenden oder müdigkeitsfördernden Situation erkennen lassen, eine Intensität der auf dem Unterhaltungssignal basierenden Massage der Massageeinheiten veränderbar ist.

Die der vorliegenden Erfindung zugrunde liegende Erkenntnis besteht darin, dass eine auf einem Audio-Unterhaltungssignal, beispielsweise einem Musikstück, basierende Massage in gewissen Situationen, insbesondere in für einen Fahrzeugführer mental beanspruchenden oder in monotonen Situationen, hinsichtlich ihrer Intensität an die jeweilige Situation unangepasst sein kann. Die der vorliegenden Erfindung zugrunde liegende Idee besteht nun darin, die Intensität der auf dem Unterhaltungssignal basierenden Massage basierend auf aktuellen Betriebsinformationen eines Fahrzeugs situationsangepasst zu verändern.

Derartige Situationen werden anhand der aktuellen Betriebsinformationen eines Fahrzeugs erkannt und die Intensität der auf dem Unterhaltungssignal basierenden Massage angepasst an die Betriebsinformationen bzw. an die anhand der Betriebsinformationen erkannte Situation verändert. Somit wird eine situativ angepasste Intensität der auf dem Unterhaltungssignal basierenden Massage bereitgestellt.

Vorteilhaft kann auf diese Weise ein Stör- oder Ablenkungspotenzial der auf dem Unterhaltungssignal basierenden Massage verringert und so die Kundenzufriedenheit erhöht werden. Darüber hinaus kann so eine gezielte Aktivierung oder Aufmerksamkeitserregung für den Fahrzeugführer angepasst an eine jeweilige Situation bereitgestellt werden.

Eine Anzahl von Massageeinheiten kann eine Einzahl oder eine Mehrzahl umfassen.

Eine Massageeinheit ist insbesondere als ein Vibrationselement mit anpassbarer Vibrationsfrequenz, beispielsweise in Form eines Unwuchtmotors, vorgesehen.

Ein Audio-Unterhaltungssignal, insbesondere ein Musikstück, kann insbesondere über eine mit einer Steuervorrichtung zum Steuern der Massageeinheiten koppelbaren Abspieleinrichtung bereitgestellt bzw. abgespielt werden. Alternativ oder zusätzlich kann ein Audio-Unterhaltungssignal zum Ansteuern der Massageeinheiten auf andere Weise eingespeist werden.

Aktuelle Betriebsinformationen eines Fahrzeugs können insbesondere mittels einer Steuervorrichtung empfangen und verarbeitet werden. Insbesondere kann das Verarbeiten einen Abgleich mit vorbestimmten Grenzwerten umfassen. Alternativ oder zusätzlich kann auch ein bereits von den Betriebsinformationen abgeleitetes Steuersignal an die Steuervorrichtung zur Anpassung der Intensität der Massage übergeben werden.

Aktuelle Betriebsinformationen eines Fahrzeugs können insbesondere über einen Fahrzeugbus übermittelt werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Ausführungsform wird der Sitz als Fahrersitz angesteuert, wobei die Massageeinheiten zur Massage eines Fahrzeugführers angesteuert werden und die Intensität der Massage der Massageeinheiten bei Auftreten einer anhand der aktuellen Betriebsinformationen erkennbaren, für den Fahrzeugführer potentiell beanspruchenden Situation verringert wird. Insbesondere wird die Intensität der Massage bei Erkennen einer mental anstrengenden bzw. beanspruchenden Situation verringert. Vorteilhaft wird auf diese Weise eine potentielle Ablenkung bzw. eine als unangenehm empfundene starke mentale Beanspruchung des Fahrzeugführers reduziert.

Gemäß einer Ausführungsform wird die Intensität der Massage in Anschluss an eine den Fahrzeugführer potentiell beanspruchende Situation wieder erhöht. Insbesondere wird die Intensität der Massage somit voll automatisch situationsangepasst geregelt. Auf diese Weise wird vorteilhaft der Komfort erhöht.

Gemäß einer Ausführungsform wird bei Auftreten einer oder in Anschluss an eine den Fahrzeugführer potentiell beanspruchende Situation eine an den Fahrzeugführer gerichtete Abfrage vorgenommen, ob die Intensität der Massage wieder erhöht werden soll. Bei Bestätigung der Abfrage wird die Intensität der Massage entsprechend erhöht. Auf diese Weise kann der Fahrzeugführer bestimmen, ob die Massage wieder in der ursprünglichen Intensität fortgeführt werden soll. Darüber hinaus kann der Fahrzeugführer somit die Verringerung der Intensität auch überstimmen, falls er trotz der ihn potentiell beanspruchenden Situation eine Massage mit stärkerer Intensität wünscht.

Gemäß einer Ausführungsform umfassen die aktuellen Betriebsinformationen Informationen zu einer aktuell eingelegten Gangstufe, wobei die Intensität der Massage bei Einlegen eines Rückwärtsgangs verringert wird. Vorzugsweise bleibt die Verringerung der Intensität der Massage auch nach einem Wechseln von einem Rückwärtsgang in einen Vorwärtsgang noch für eine vorbestimmte Zeitdauer erhalten. Beispielsweise kann eine solche vorbestimmte Zeitdauer 10 bis 60 Sekunden betragen. Auf diese Weise wird sichergestellt, dass beim Rückwärtsfahren und/oder Rangieren der Fahrzeugführer durch die auf dem Unterhaltungssignal basierende Massage nicht gestört wird.

Gemäß einer weiteren Ausführungsform umfassen die aktuellen Betriebsinformationen Informationen zu einer aktuell eingelegten Scheibenwischerstufe, wobei die Intensität der Massage bei Einlegen der höchsten Scheibenwischerstufe verringert wird. Auf diese Weise wird sichergestellt, dass bei starkem Regen der Fahrzeugführer durch die auf dem Unterhaltungssignal basierende Massage nicht gestört wird.

Gemäß einer Ausführungsform umfassen die aktuellen Betriebsinformationen Informationen zur Navigation des Fahrzeugs. Beispielsweise können derartige Informationen den Verlauf einer geplanten Route und den aktuellen Standort enthalten. Alternativ oder zusätzlich umfassen die aktuellen Betriebsinformationen Informationen zu aktuellen Verkehrsmeldungen, beispielsweise über Radio oder Mobilfunk bereitgestellte Verkehrsmeldungen. Weiterhin alternativ oder zusätzlich umfassen die aktuellen Betriebsinformationen Informationen zur aktuellen Umgebung des Fahrzeugs. Insbesondere handelt es sich um Daten bzw. Informationen zu einer sensorisch erfassten Umgebung, die beispielsweise mittels einer Kamera und/oder eines Radarsensors und/oder eines Ultraschallsensors des Fahrzeugs erfasst wird. Anhand der aktuellen Informationen zur Navigation und/oder zu aktuellen Verkehrsmeldungen und/oder zur aktuellen Umgebung des Fahrzeugs wird eine potentiell erhöhte Aufmerksamkeit erfordernde Verkehrssituation oder eine Situation mit potentiell enger oder unklarer Fahrspur erkannt und dabei die Intensität der Massage verringert. Eine solche Situation mit potentiell enger oder unklarer Fahrspur kann beispielsweise in einer Baustelle, einer Mautstation oder einem Parkhaus auftreten. Eine potentiell erhöhte Aufmerksamkeit erfordernde Verkehrssituation kann beispielsweise eine Kreuzungs-, Abbiege- oder Einfädelsituation sein. Auf diese Weise wird vorteilhaft die Aufmerksamkeit des Fahrzeugführers in entsprechenden Situationen nicht gestört.

Gemäß einer umfassen die aktuellen Betriebsinformationen Informationen zu einem aktuellen Fahrzustand. Alternativ oder zusätzlich können Informationen zur aktuellen Umgebung des Fahrzeugs umfasst sein. Anhand der aktuellen Fahrzustands- und/oder Umgebungsinformationen werden potentiell gefährliche Fahrmanöver erkannt und dabei die Intensität der Massage verringert. Beispielsweise kann dadurch ein Überhol-, Ausweich- oder Notbremsmanöver erkannt werden. Hierzu erhobene Fahrzustandsinformationen können beispielsweise die aktuelle Motorleistung, eine aktuelle Geschwindigkeit, Längsbeschleunigung, Querbeschleunigung, Gierrate und/oder etwaiger Schlupf bzw. Informationen eines elektronischen Stabilitätsprogramms (ESP), einer Anti-Schlupfregelung (ASR) und/oder eines Antiblockiersystems (ABS) sein. Aktuelle Umgebungsinformationen können insbesondere einen sensorisch erfassten Abstand zu einem vorausfahrenden oder nebenherfahrenden Fahrzeug bzw. Informationen eines Abstandsregeltempomaten, oft auch als Active Cruise Control (ACC) bezeichnet, umfassen. Auf diese Weise wird vorteilhaft die Konzentration des Fahrzeugführers bei entsprechenden Manövern nicht gestört.

Gemäß einer Ausführungsform umfassen die aktuellen Betriebsinformationen Informationen zu einem aktuellen bedient Verhalten beim Bedienen des Fahrzeugs, wobei anhand der Informationen zum Bedienverhalten eine Situation mit potentieller Ablenkung des Fahrzeugführers erkannt und die Intensität der Massage verringert wird. Insbesondere stellt eine derartige Situation mit potentieller Ablenkung ein aktives Telefonat oder eine aktive Eingabe am Bordcomputer, am Navigationsgerät oder am Telefon dar. Es kann sich auch um eine Bedienung einer Sprachsteuerung, einen Aufruf von Information, wie beispielsweise Verkehrsmeldungen oder Nachrichten, oder dergleichen handeln. Auf diese Weise wird der Fahrzeugführer vorteilhaft situationsangepasst nicht noch zusätzlich durch die auf dem Unterhaltungssignal basierende Massage abgelenkt.

Gemäß einer Ausführungsform wird bei Verringerung der Intensität die Massage der Massageeinheiten mit verringerter Intensität fortgesetzt. Auf diese Weise erkennt der Fahrzeugführer vorteilhaft, dass die Massage lediglich gedämpft bzw. mit geringerer Intensität fortgeführt wird und kein Defekt oder keine ungewollte Deaktivierung vorliegt. Bei einer weiteren Ausführungsform wird bei Verringerung der Intensität der Massage der Massageeinheiten die Intensität bis auf null verringert, und so die Massage unterbrochen oder beendet.

Insbesondere kann bei unterschiedlichen Arten von die Verringerung auslösenden Ereignissen oder Situationen eine unterschiedliche Art und Weise der Verringerung der Intensität vorgesehen sein. So kann bei lediglich vorübergehenden Situationen/Ereignissen, wie beispielsweise dem Einlegen des Rückwärtsgangs, lediglich eine Reduktion der Intensität vorgesehen sein, während bei üblicherweise anhaltenden Situationen bzw. Ereignissen, wie Einstellen einer höchsten Stufe des Scheibenwischers, eine Unterbrechung oder Abschaltung vorgesehen sein kann. Vorteilhaft ist auf diese Weise die Bedienung des Massagesystems intuitiver.

Gemäß einer Ausführungsform wird das Verringern der Intensität der Massage der Massageeinheiten mit einem langsamen Abfallen der Intensität vorgenommen. Darüber hinaus kann ein anschließendes Erhöhen der Intensität wieder mit einem langsamen Anstieg vorgenommen werden. Auf diese Weise wird ein als komfortabel empfundener Übergang bei Veränderung der Intensität geschaffen. Insbesondere erfolgt der langsame Abfall mit stetig sinkender Intensität, vorzugsweise über eine vorbestimmte Zeitdauer, beispielsweise von mehreren Sekunden.

Gemäß einer vorteilhaften Ausführungsform umfassen die aktuellen Betriebsinformationen Informationen zu einem Status eines Gefahrenwarnsystems. Bei Auftreten einer Gefahrenwarnung wird die Intensität der Massage der Massageeinheiten schlagartig verringert. Auf diese Weise kann die Aufmerksamkeit des Fahrzeugführers unmittelbar auf die Gefahrensituation gelenkt werden. Bei dem Gefahrenwarnsystem kann es sich insbesondere um einen Spurhalte- und/oder Kollisionswarn- und/oder Notbremsassistenten oder dergleichen handeln. Insbesondere wird der Fahrzeugführer durch die schlagartige Verringerung der Intensität auf die Gefahrenwarnung zusätzlich aufmerksam. Insbesondere kann auf diese Weise ein zuvor bei längerer Massage eingetretener Gewöhnungseffekt genutzt werden, um die Veränderung durch eine plötzliche bzw. schlagartige Verringerung der Intensität der Massage zur Erhöhung der Aufmerksamkeit einzusetzen.

Gemäß einer Ausführungsform wird der Sitz als Fahrersitz angesteuert, wobei die Massageeinheiten zur Massage eines Fahrzeugführers angesteuert werden und die Intensität der Massage der Massageeinheiten bei Auftreten einer anhand der aktuellen Betriebsinformationen erkennbaren, für den Fahrzeugführer monotonen und/oder müdigkeitsfördernden Situation erhöht wird. Vorteilhaft kann auf diese Weise der Wachheitsgrad bzw. die Aufmerksamkeit des Fahrzeugführers erhalten werden. Insbesondere wird der Fahrzeugführer durch die auf dem Unterhaltungssignal basierende Massage mit erhöhter Intensität angeregt bzw. aktiviert.

Gemäß einer Weiterbildung umfassen die aktuellen Betriebsinformationen Informationen zur Navigation des Fahrzeugs und/oder zu aktuellen Verkehrsmeldungen und/oder zur aktuellen Umgebung des Fahrzeugs, wobei anhand der aktuellen Informationen zur Navigation und/oder zu aktuellen Verkehrsmeldungen und/oder zur aktuellen Umgebung des Fahrzeugs eine monotone und/oder müdigkeitsfördernde Situation erkannt und dabei die Intensität der Massage erhöht wird. Beispielhaft kann eine müdigkeitsfördernde Situation bei einer langen Geradeausfahrt, einer Autobahnfahrt mit wenig Verkehr oder einer Nachtfahrt bestehen.

Gemäß einer Ausführungsform einer Sitzanordnung bildet der Sitz einen Fahrersitz, wobei die Massageeinheiten zur Massage eines Fahrzeugführers vorgesehen sind und wobei die Intensität der Massage der Massageeinheiten bei Auftreten einer anhand der aktuellen Betriebsinformationen erkennbaren, für den Fahrzeugführer potentiell beanspruchenden Situation verringerbar ist. Eine solch potentiell beanspruchende Situation kann, wie vorstehend in Bezug auf ein Verfahren zur Ansteuerung von Massageeinheiten dargelegt, insbesondere bei Einlegen eines Rückwärtsgangs und/oder Einlegen der höchsten Scheibenwischerstufe und/oder Erkennen einer eine Kreuzungs-, Abbiege- oder Einfädelsituation und/oder Erkennen einer Situation mit potentiell unklarer, enger oder gefährlicher Fahrspur und/oder Erkennen einer Situation mit potentieller Ablenkung des Fahrzeugführers bestehen. Alternativ oder zusätzlich ist gemäß einer Ausführungsform die Intensität der Massage der Massageeinheiten bei Auftreten einer anhand der aktuellen Betriebsinformationen erkennbaren, für den Fahrzeugführer monotonen bzw. müdigkeitsfördernden Situation erhöhbar. Beispielsweise kann dies bei einer langen Geradeausfahrt, einer Autobahnfahrt mit wenig Verkehr oder einer Nachtfahrt der Fall sein.

Die obigen Ausgestaltungen und Weiterbildungen lassen sich, sofern sinnvoll, beliebig miteinander kombinieren. Insbesondere lassen sich sämtliche in Bezug auf das Verfahren zum Ansteuern von Massageeinheiten beschriebenen Merkmale und Funktionen auf eine Sitzanordnung für ein oder in einem Fahrzeug übertragen. Insbesondere kann dabei eine Steuervorrichtung vorgesehen sein, die zu der jeweiligen Ansteuerung ausgelegt ist.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: ein Blockschaltbild einer Ausführungsform einer Sitzanordnung in einem Kraftfahrzeug;
- Fig. 2: eine Sitzanordnung in einem Kraftfahrzeug gemäß einer weiteren Ausführung Form;
- Fig. 3: eine Sitzanordnung gemäß Fig. 1 oder 2 mit einer Ein-/Ausgabevorrichtung;
- Fig. 4: ein Ablaufdiagramm eines Verfahrens zum Ansteuern von Massageeinheiten in einem Sitz.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

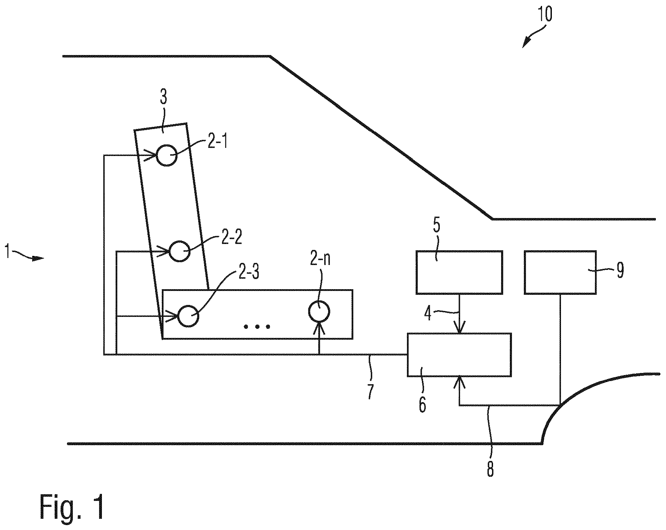

Fig. 1 zeigt ein Blockschaltbild einer Ausführungsform einer Sitzanordnung 1 in einem Kraftfahrzeug 10.

Das Kraftfahrzeug 10 ist hier mit einer abschnittsweise gezeichneten Silhouette angedeutet. Die Sitzanordnung 1 ist entsprechend in dem Kraftfahrzeug 10 aufgenommen.

Die Sitzanordnung 1 umfasst einen Fahrzeugsitz 3, welcher insbesondere ein Fahrersitz ist, sowie eine Anzahl, also eine oder mehrere, von Massageeinheiten 2-1 bis 2-n, hier beispielhaft konkret vier. Dabei sind in Fig. 1 lediglich beispielhaft die Massageeinheiten 2-1 und 2-2 in der Sitzlehne und die Massageeinheiten 2-3 und 2-n in der Sitzfläche angeordnet. Weitere Massageeinheiten sind durch drei Punkte angedeutet. Die Anzahl und Anordnung der Massageeinheiten kann variiert werden.

Zur Ansteuerung der Massageeinheiten 2-1 bis 2-n ist eine Steuervorrichtung 6 vorgesehen, die aus einem von einer Abspielvorrichtung 5 bereitgestellten Audio-Unterhaltungssignal 4 ein Steuersignal 7 für die Massageeinheiten 2-1 bis 2-n erzeugt und an diese weiterleitet.

Das Audio-Unterhaltungssignal 4 kann z.B. ein Audiosignal sein, welches ein Musikstück oder dergleichen darstellt. Dabei kann das Unterhaltungssignal 4 aus unterschiedlichen Quellen stammen. Beispielsweise kann die Abspielvorrichtung 5 ein in einem Fahrzeug installiertes Audio-Unterhaltungssystem (Entertainmentsystem), z.B. enthaltend ein Radio, einen CD-Spieler, DVD-Spieler, Blu-ray-Spieler und/oder eine MP3-Quelle. Die Abspielvorrichtung 5 kann aber z.B. auch das Audio-System sein, welches über Bluetooth von z.B. einem Smartphone das Unterhaltungssignal 4 empfängt. Bei weiteren Ausführungen kann es sich beispielsweise auch um ein Signal eines Video Clips, Films, Konsolenspiels oder dergleichen handeln.

Insbesondere können auch die Steuervorrichtung 6 und die Abspielvorrichtung 5 in einem einzigen Gerät zusammengefasst bzw. integriert sein. Beispielsweise kann in dem Fahrzeug-Audio-System bereits die Steuervorrichtung 6 integriert sein. Die Massageeinheiten 2-1 bis 2-n sind in einer Ausführungsform direkt mit der Abspielvorrichtung 5 gekoppelt, welche die notwendige Ansteuerschaltung zum Bereitstellen des Ausgangssignals 7 aufweist. Sowohl die Abspielvorrichtung 5 als auch die Steuervorrichtung 6 können dabei zumindest teilweise als Computerprogrammmodule ausgebildet sein, die von einer Recheneinrichtung des Audio-Systems ausgeführt werden.

Bei einer weiteren Ausführung kann es sich bei der Steuervorrichtung 6 beispielsweise auch um eine externe Recheneinrichtung mit einem entsprechenden Computerprogrammmodul bzw. ein Steuergerät handeln, welches die einzelnen Massageeinheiten 2-1 bis 2-n mit geeigneten Steuersignalen versorgt. Bei der Recheneinrichtung kann es sich beispielsweise um ein Fahrzeugmodul, insbesondere ein Bordnetzsteuergerät (Body Control Module), handeln.

Die Steuervorrichtung 6 ist ferner mit einer Fahrzeugkomponente 9 gekoppelt. Die Fahrzeugkomponente 9 ist als eine datenverarbeitende Fahrzeugkomponente ausgebildet und stellt der Steuervorrichtung 6 Betriebsinformationen 8 des Fahrzeugs 10 bereit. Die aktuellen Betriebsinformationen 8 des Fahrzeugs 10 können beispielsweise über einen Fahrzeugbus an die Steuervorrichtung 6 übertragen werden.

Bei den bereitgestellten Betriebsinformationen 8 kann es sich um unterschiedlichste im Fahrzeug 10 verarbeitete Informationen handeln, welche das Auftreten einer für einen Fahrzeugführer potentiell mental beanspruchenden oder monotonen bzw. müdigkeitsfördernden Situation erkennen lassen könnten.

Beispielsweise ist die Fahrzeugkomponente 9 mit einem nicht dargestellten Getriebe oder einer nicht dargestellten Gangwahleinrichtung gekoppelt und stellt der Steuervorrichtung 6 Informationen zu einer aktuell eingelegten Gangstufe des Fahrzeugs 10 bereit.

Beispielsweise ist die Fahrzeugkomponente 9 weiterhin mit einer nicht dargestellten Scheibenwischersteuerung oder einer nicht dargestellten Scheibenwischer-Wahleinrichtung gekoppelt und stellt der Steuervorrichtung 6 Informationen zu einer aktuellen Scheibenwischerstufe des Fahrzeugs 10 bereit.

Die bereitgestellten Betriebsinformationen 8 sind darauf nicht begrenzt sondern können vielfältige weitere Informationen bzw. Daten beinhalten, worauf in Bezug auf die weiteren Figuren noch näher eingegangen wird.

Die Steuervorrichtung 6 steuert die Massageeinheiten 2-1 bis 2-n zur Massage mit einer vorbestimmten Intensität an, wobei diese vorbestimmte Intensität durch einen Benutzer einstellbar vorgesehen sein kann.

Die Steuervorrichtung 6 ist ferner ausgelegt, die Intensität der Massage situationsgerecht angepasst an die Betriebsinformationen 8 zu verändern.

Beispielsweise verringert die Steuervorrichtung 6 die Intensität der Massage bei Einlegen des Rückwärtsgangs am Fahrzeug 10. Auf diese Weise kann sich ein Fahrzeugführer auf ein Rangieren im Rückwärtsgang konzentrieren und wird von der auf dem Unterhaltungssignal basierenden Massage nicht abgelenkt. Bei einem anschließenden Einlegen eines Vorwärtsganges wird insbesondere zunächst eine vorbestimmte Zeitdauer abgewartet und anschließend die Intensität der auf dem Unterhaltungssignal basierenden Massage wieder auf das vor dem Einlegen des Rückwärtsgangs vorgesehene Niveau angehoben.

Ferner verringert die Steuervorrichtung die Intensität der Massage beispielsweise bei Einlegen einer höchsten Scheibenwischerstufe am Fahrzeug bzw. einer Wähleinrichtung des Fahrzeugs. Auf diese Weise kann sich ein Fahrzeugführer bei starkem Niederschlag ohne Ablenkung durch die Massage auf das Führen des Fahrzeugs konzentrieren.

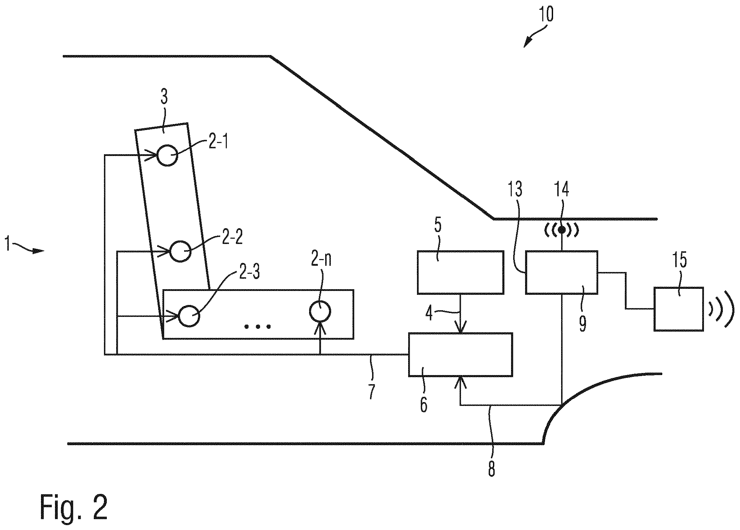

Fig. 2 zeigt eine Sitzanordnung 1 in einem Kraftfahrzeug 10 gemäß einer weiteren Ausführungsform.

Bei dieser Ausführungsform weist die Fahrzeugkomponente 9 eine Ausbildung als Steuergerät 13 des Fahrzeugs 10 auf. Dieses ist mit unterschiedlichsten Empfangseinrichtungen und Sensoren des Fahrzeugs 10, hier beispielhaft symbolisiert durch eine Antenne 14, die insbesondere eine GPS, Radio und/oder Mobilfunkantenne umfassen kann, sowie einen Umgebungssensor 15, der insbesondere einen Ultraschall, Radar und/oder optischen Sensor umfassen kann, gekoppelt.

Darüber hinaus können weitere nicht dargestellte Sensoren, insbesondere Beschleunigungs- oder Schlupfsensoren, mit dem Steuergerät 13 gekoppelt sein.

Darüber hinaus kann ein nicht dargestelltes Motorsteuergerät mit den Steuergerät 13 gekoppelt sein und damit sämtliche Motor-Informationen, insbesondere die aktuell abgerufene Motorleistung, an das Steuergerät 13 übermittelt werden.

Mittels der Empfangseinrichtungen empfängt das Steuergerät 13 Navigationsinformationen, beispielsweise über GPS, sowie aktuelle Verkehrsinformationen, zum Beispiel über Radio oder Mobilfunk.

Mittels des Umgebungssensors 15 erfasst das Steuergerät 13 die Umgebung des Fahrzeugs 10, insbesondere Abstände zu anderen Fahrzeugen oder zu einer Straßenbegrenzung sowie gegebenenfalls Sichtverhältnisse. Darüber hinaus umfasst es einen Fahrzustand des Fahrzeugs, beispielsweise Längs- oder Querbeschleunigungen, Schlupfraten oder dergleichen.

Die auf diese Weise erhaltenen Informationen übermittelt das Steuergerät 13 in Form der Betriebsinformationen 8 an die Steuervorrichtung 6.

Bei einer Ausführungsform kann die Steuervorrichtung 6 gemeinsam mit dem Steuergerät 13 auch als Softwaremodul auf einer gemeinsamen Recheneinrichtung, beispielsweise eines Bordnetzsteuergeräts (Body Control Module), ausgebildet sein.

Die auf diese Weise von den Steuergerät 13 für die Steuervorrichtung 6 bereitgestellten Betriebsinformationen 8 nutzt die Steuervorrichtung 6 zur situationsadaptiven Veränderung der Intensität der Massage der Massageeinheiten 2-1 bis 2-n in dem Sitz 3.

Beispielsweise ist die Steuervorrichtung 6 ausgelegt und ausgebildet, anhand aktueller Informationen zur Navigation und zu aktuellen Verkehrsmeldungen sowie zur aktuellen Umgebung des Fahrzeugs 10 eine potenziell erhöhte Aufmerksamkeit erfordernde Verkehrssituation zu erkennen. Basierend auf den gleichen oder weiteren Betriebsinformationen 8 kann auch eine Situation mit potenziell enger oder unklarer Fahrspur erkannt werden.

Bei Erkennen einer derartigen Situation verändert die Steuervorrichtung 6 das Ausgangssignal 7 derart, dass die Intensität der auf dem Audio-Unterhaltungssignal 4 basierenden Massage der Massageeinheiten 2-1 bis 2-n verringert wird.

Darüber hinaus ist die Steuervorrichtung 6 beispielsweise ausgelegt und ausgebildet, anhand von aktuellen Fahrzustandsinformationen und Umgebungsinformationen potenziell gefährliche Fahnenmanöver zu erkennen. Beispielsweise kann aus Informationen zu einer Beschleunigung gemeinsam mit den Motorleistungsinformationen und gleichzeitigen Informationen zu einem relativ geringen Abstand zu einem anderen Fahrzeug ein potentiell gefährliches Überholmanöver abgeleitet werden. Darüber hinaus kann aus Informationen zur Winkelgeschwindigkeit bei einem Lenkeinschlag sowie zur Querbeschleunigung des Fahrzeugs ein potentiell gefährliches Ausweichmanöver abgeleitet werden. Ferner kann aus einer sehr hohen negativen Längsbeschleunigung ein Notbremsmanöver abgeleitet werden.

Bei Erkennen derartiger potenziell gefährliche Fahrmanöver verändert die Steuervorrichtung 6 ebenfalls das Ausgangssignal 7 derart, dass die Intensität der Massage verringert wird. Somit kann die volle Konzentration bzw. Aufmerksamkeit des Fahrzeugführers zur Bewältigung der Situation bzw. des Fahrmanövers zur Verfügung stehen.

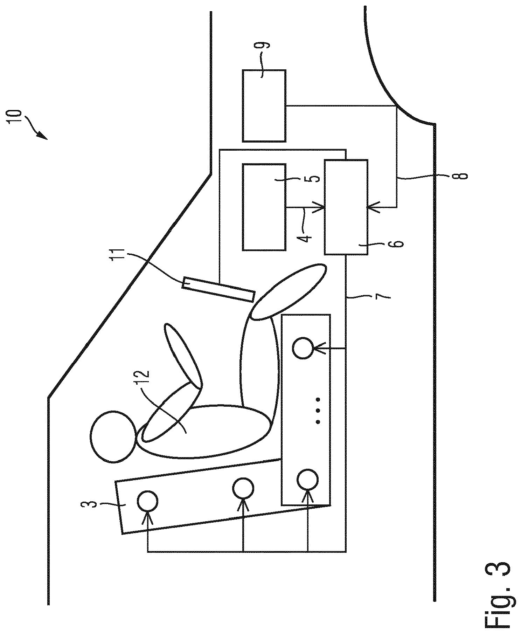

Fig. 3 zeigt eine Sitzanordnung gemäß Fig. 1 oder 2 mit einer Ein-/Ausgabevorrichtung.

Beispielsweise ist die Ein-/Ausgabevorrichtung 11 als mit der Fahrzeugkomponente 9 gekoppelte Mensch-Maschine-Schnittstelle des Fahrzeugs 10 ausgebildet. Auf diese Weise erhält die Fahrzeugkomponente 9 Informationen zum aktuellen Bedienverhalten beim Bedienen des Fahrzeugs 10 und stellt diese der Steuervorrichtung 6 bereit. Die Steuervorrichtung 6 ist dabei ausgelegt und ausgebildet, anhand der Informationen zum Bedienverhalten eine Situation mit potentieller Ablenkung des Fahrzeugführers 12 zu erkennen.

Beispielsweise erkennt die Steuervorrichtung 6 auf diese Weise ein aktives Telefonat oder eine aktive Eingabe am Bordcomputer, am Navigationsgerät oder am Telefon und verändert das Ausgangssignal 7 derart, dass die Intensität der Massage verringert wird. Auf diese Weise wird der ohnehin schon durch die Bedienung potenziell abgelenkte Fahrzeugführer während des Bedienens nicht noch zusätzlich durch die auf dem Unterhaltungssignal basierenden Massage abgelenkt.

Darüber hinaus kann auch eine umgekehrte Kommunikation zwischen der Steuervorrichtung 6, der Fahrzeugkomponente 9 und der Ein-/Ausgabevorrichtung 11 vorgesehen sein. Beispielsweise ist die Steuervorrichtung 6 ausgebildet, in Anschluss an eine den Fahrzeugführer 12 potentiell beanspruchenden Situation über die Ein-/Ausgabevorrichtung 11 eine an den Fahrzeugführer 12 gerichtete Abfrage vorzunehmen, ob die Intensität der Massage wieder erhöht werden soll. Der Fahrzeugführer 12 kann somit durch Bestätigung der Abfrage die Steuervorrichtung 6 veranlassen, das Ausgangssignal 7 wieder derart zu verändern, dass Intensität der Massage erhöht wird.

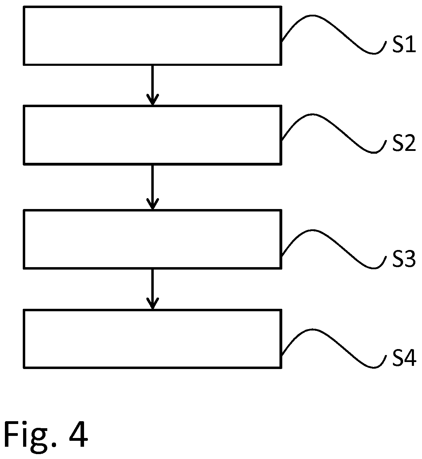

Fig. 4 zeigt ein Ablaufdiagramm eines Verfahrens zum Ansteuern von Massageeinheiten 2-1 bis 2-n in einem Sitz 3.

Der Sitz 3 kann dabei insbesondere ein Fahrzeugsitz 3, vorzugsweise ein Fahrersitz, sein.

Das Verfahren sieht das Abspielen, S1, eines Audio-Unterhaltungssignals 4 vor. Dieser Schritt S1 ist jedoch nicht zwingend notwendig und kann ersetzt werden, beispielsweise durch ein Abnehmen eines anderweitig bereitgestellten Audio-Unterhaltungssignals 4.

Das Verfahren sieht ferner das Steuern, S2, von in den Sitz 3 integrierten Massageeinheiten 2-1 bis 2-n basierend auf dem Audio-Unterhaltungssignal 4 vor.

Darüber hinaus sieht das Verfahren das Empfangen und Verarbeiten, S3, von aktuellen Betriebsinformationen 8 eines Fahrzeugs vor. Dieser Schritt S1 ist jedoch nicht zwingend notwendig und kann auch ersetzt werden, beispielsweise durch Bereitstellen einer bereits von Betriebsinformationen abgeleiteten Steuervorgabe.

Außerdem sieht das Verfahren das Verändern, S4, einer Intensität der auf dem Unterhaltungssignal 4 basierenden Massage der Massageeinheiten 2-1 bis 2-n angepasst an die aktuellen Betriebsinformationen 8 vor.

Das Audio-Unterhaltungssignal 4 kann z.B. ein Musikstück sein, welches zum Abspielen S1 mittels einer Abspielvorrichtung 5 abgespielt wird. Das Audio-Unterhaltungssignal 4 kann alternativ oder zusätzlich zum Abspielen S1 auch mittels einer Audiosignalquelle in die Abspielvorrichtung 5 eingespeist werden. Die Audiosignalquelle kann dabei insbesondere eine mobile Audiosignalquelle, wie z.B. ein Smartphone oder dergleichen, ein Empfangsgerät, wie beispielsweise ein Radioempfänger oder dergleichen, oder eine fahrzeuginterne Audiosignalquelle, wie z.B. ein Spieler zum Abspielen eines Speichermediums, beispielsweise einer CD, eines Massenspeichermedium oder dergleichen, sein.

Insbesondere bei einem Fahrzeugsitz, also der Anwendung des Verfahrens in einem Fahrzeug 10, kann die Abspielvorrichtung 5 ein Unterhaltungssystem des jeweiligen Fahrzeugs 10 sein oder mit diesen gekoppelt sein.

Das Steuern S2 der Massageeinheiten 2-1 bis 2-n kann beispielsweise mittels eines pulsweitenmodulierten Ausgangssignals 7 erfolgen. Dazu kann das Audio-Unterhaltungssignals 4 durch die Steuervorrichtung 6 in eine Folge von entsprechenden Pulsen gewandelt werden.

Das Empfangen und Verarbeiten S3 von aktuellen Betriebsinformationen 8 wird insbesondere durch eine Kopplung der Steuervorrichtung 6 mit einer Betriebsinformationen 8 bereitstellen Fahrzeugkomponente 9, wie beispielsweise einem Steuergerät 13, erreicht. Die Verarbeitung kann entweder durch das Erkennen eines vorbestimmten Signals, beispielsweise eines eingelegten Rückwärtsgangs, oder das Erkennen einer Situation durch Ableiten von einer Signalstärke, beispielsweise einer Höhe der aktuell abgerufenen Motorleistung und/oder einen Abgleich mit einem vorbestimmten Grenzwert erfolgen. Darüber hinaus können in Datenbanken der Steuervorrichtung hinterlegte Situationsmuster mit Kombinationen von mehreren bereitgestellten Betriebsinformationen 8 bzw. Signalen abgeglichen werden, beispielsweise zu einer Kombination aus spezifischen Navigations-, Verkehrs- und Umgebungsinformationen.

Zum Verändern S4 der Intensität der auf dem Unterhaltungssignal basierenden Massage der Massageeinheiten 2-1 bis 2-n passt die Steuervorrichtung 6 insbesondere einen Pegel des Ausgangssignals 7 an. Beispielsweise wird zur Verringerung der Intensität der Massage der Pegel des Ausgangssignals 7 gesenkt und zur Erhöhung der Intensität der Pegel erhöht.

Bei einer Ausführungsform kann das Audio-Unterhaltungssignal 4 in Abhängigkeit der Ausgabelautstärke der Abspielvorrichtung 5 angepasst werden. Die Ausgabelautstärke bestimmt in solch einer Ausführung folglich die Stärke der Vibrationen. Umgekehrt kann bei einer derartigen Ausführung auch die Ausgabe Lautstärke der Ausgabevorrichtung 5 bei Anpassung der Intensität der Massage, insbesondere durch die Steuervorrichtung 6, mit angepasst werden.

Die Intensität der Massage der Massageeinheiten 2-1 bis 2-n wird verringert, wenn anhand der Betriebsinformationen 8 eine für den Fahrzeugführer 12 potentiell beanspruchende Situation erkannt wird.

Im Anschluss an die den Fahrzeugführer 12 potentiell beanspruchende Situation kann bei einer Ausführung die Intensität der Massage wieder automatisch erhöht werden. Alternativ oder zusätzlich kann eine, insbesondere über eine Ein-/ Ausgabevorrichtung 11 ermöglichte, Abfrage an den Fahrzeugführer 12 vorgenommen werden, ob die Intensität der Massage wieder erhöht werden soll. Insbesondere kann eine Voreinstellung, beispielsweise im Fahrzeugmenü eines Bordcomputers des Fahrzeugs 10, vorgesehen sein, um die Abfrage grundsätzlich einzustellen oder abzustellen.

Die Abfrage kann insbesondere vor oder nach Beendigung der den Fahrzeugführer 12 potentiell beanspruchenden Situation vorgenommen werden. Bei Bestätigung der Abfrage durch den Fahrzeugführer 12, insbesondere über die Ein-/Ausgabevorrichtung, wird die Intensität der Massage entsprechend wieder erhöht.

Darüber hinaus sind weitere Optionen zur Ansteuerung bei Verringerung und/oder Erhöhung der Intensität der Massage der Massageeinheiten 2-1 bis 2-n, einstellbar. Beispielsweise wird gemäß einer möglichen Einstellung bei Verringerung der Intensität der Massage der Massageeinheiten 2-1 bis 2-n die Massage mit verringerter Intensität fortgesetzt.

Eine alternative Einstellung besteht darin, im Falle des Verringerns der Intensität der Massage diese bis auf null zu verringern, sodass die Massage unterbrochen oder beendet wird.

Eine weitere Einstellung besteht darin, zum Verringern der Intensität der Massage der Massageeinheiten 2-1 bis 2-n die Intensität langsam abfallen zu lassen.

Diese Einstellungen können insbesondere für unterschiedliche erkannte und den Fahrzeugführer potentiell beanspruchende Situationen individuell bestimmt werden.

Sofern die Fahrzeugkomponente 9 ein Gefahrenwarnsystem umfasst, kann bei Auftreten einer Gefahrenwarnung die Intensität der Massage der Massageeinheiten 2-1 bis 2-n unabhängig von einer Einstellung schlagartig verringert werden. Auf diese Weise wird durch die schlagartige Verringerung der Intensität ein Aufmerksamkeitsschub bei dem Fahrzeugführer 12 hervorgerufen.

Gemäß einer weiteren Ausführung kann eine Veränderung der Intensität basierend auf den Betriebsinformationen 8 auch darin bestehen, die Intensität der Massage der Massageeinheiten 2-1 bis 2-n bei Auftreten einer anhand der Betriebsinformationen 8 erkennbaren, für den Fahrzeugführer 12 monotonen und/oder müdigkeitsfördernden Situation zu erhöhen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar, solange der resultierende Gegenstand zum Umfang gehört, der durch die Ansprüche definiert ist.

### Bezugszeichenliste

- 1: Sitzanordnung
- 2-1 bis 2-n: Massageeinheiten
- 3: Sitz
- 4: Audio-Unterhaltungssignal
- 5: Abspielvorrichtung
- 6: Steuervorrichtung
- 7: Ausgangssignal
- 8: Fahrzeuginformationen
- 9: Fahrzeugkomponente
- 10: Fahrzeug
- 11: Ein-/Ausgabevorrichtung
- 12: Fahrzeugführer
- 13: Steuergerät
- 14: Antenne
- 15: Umgebungssensor

## Patentansprüche

1. Verfahren zur Ansteuerung von Massageeinheiten (2-1 bis 2-n) einer in einem Sitz (3) angeordneten Massagevorrichtung in einem Fahrzeug (10) zur Massage eines Insassen, mit den folgenden Verfahrensschritten:
Steuern (S2) von in den Sitz (3) integrierten Massageeinheiten (2-1 bis 2-n) basierend auf einem Audio-Unterhaltungssignal (4); und
Verändern (S4) einer Intensität der auf dem Unterhaltungssignal (4) basierenden durch die Massageeinheiten (2-1 bis 2-n) bereitgestellten Massage angepasst an aktuelle Betriebsinformationen (8) des Fahrzeugs (10), welche das Auftreten einer für einen Fahrzeugführer potentiell mental beanspruchenden oder müdigkeitsfördernden Situation erkennen lassen.

2. Verfahren nach Anspruch 1,
**dadurch gekennzeichnet,**
**dass** der Sitz als Fahrersitz (3) angesteuert wird, wobei die Massageeinheiten (2-1 bis 2-n) zur Massage eines Fahrzeugführers (12) angesteuert werden und die Intensität der Massage der Massageeinheiten (2-1 bis 2-n) bei Auftreten einer anhand der aktuellen Betriebsinformationen (8) erkennbaren, für den Fahrzeugführer (12) potentiell beanspruchenden Situation verringert wird.

3. Verfahren nach Anspruch 2 ,
**dadurch gekennzeichnet,**
**dass** die Intensität der Massage in Anschluss an eine den Fahrzeugführer (12) potentiell beanspruchende Situation wieder erhöht wird.

4. Verfahren nach Anspruch 2,
**dadurch gekennzeichnet,**
**dass** bei Auftreten einer oder in Anschluss an eine den Fahrzeugführer (12) potentiell beanspruchenden Situation eine an den Fahrzeugführer (12) gerichtete Abfrage vorgenommen wird, ob die Intensität der Massage wieder erhöht werden soll, und bei Bestätigung der Abfrage die Intensität der Massage erhöht wird.

5. Verfahren nach einem der vorstehenden Ansprüche,
**dadurch gekennzeichnet,**
**dass** die aktuellen Betriebsinformationen (8) Informationen zu einer aktuell eingelegten Gangstufe umfassen, wobei die Intensität der Massage bei Einlegen eines Rückwärtsgangs verringert wird.

6. Verfahren nach einem der vorstehenden Ansprüche,
**dadurch gekennzeichnet,**
**dass** die aktuellen Betriebsinformationen (8) Informationen zu einer aktuell eingelegten Scheibenwischerstufe umfassen, wobei die Intensität der Massage bei Einlegen der höchsten Scheibenwischerstufe verringert wird.

7. Verfahren nach einem der vorstehenden Ansprüche,
**dadurch gekennzeichnet,**
**dass** die aktuellen Betriebsinformationen (8) Informationen zur Navigation des Fahrzeugs und/oder zu aktuellen Verkehrsmeldungen und/oder zu einer aktuellen, insbesondere sensorisch erfassten, Umgebung des Fahrzeugs umfassen, wobei anhand der aktuellen Informationen zur Navigation und/oder zu aktuellen Verkehrsmeldungen und/oder zur aktuellen Umgebung des Fahrzeugs (10) eine potentiell erhöhte Aufmerksamkeit erfordernde Verkehrssituation oder eine Situation mit potentiell enger oder unklarer Fahrspur erkannt und die Intensität der Massage verringert wird.

8. Verfahren nach einem der vorstehenden Ansprüche,
**dadurch gekennzeichnet,**
**dass** die aktuellen Betriebsinformationen (8) Informationen zu einem aktuellen Fahrzustand und/oder zu einer aktuellen Umgebung des Fahrzeugs (10) umfassen, wobei anhand der aktuellen Fahrzustands- und/oder Umgebungsinformationen ein potentiell gefährliches Fahrmanöver, insbesondere ein Überhol-, Ausweich- oder Notbremsmanöver, erkannt und die Intensität der Massage verringert wird.

9. Verfahren nach einem der vorstehenden Ansprüche,
**dadurch gekennzeichnet,**
**dass** die aktuellen Betriebsinformationen (8) Informationen zu einem aktuellen Bedienverhalten beim Bedienen des Fahrzeugs (10) umfassen, wobei anhand der Informationen zum Bedienverhalten eine Situation mit potentieller Ablenkung des Fahrzeugführers (12) erkannt und die Intensität der Massage verringert wird.

10. Verfahren nach einem der vorstehenden Ansprüche,
**dadurch gekennzeichnet,**
**dass** bei Verringerung der Intensität die Massage der Massageeinheiten (2-1 bis 2-n) mit verringerter Intensität fortgesetzt oder die Intensität bis auf null verringert und die Massage unterbrochen oder beendet wird.

11. Verfahren nach Anspruch 10
**dadurch gekennzeichnet,**
**dass** das Verringern der Intensität der Massage der Massageeinheiten (2-1 bis 2-n) mit einem langsamen Abfallen der Intensität vorgenommen wird.

12. Verfahren nach einem der vorstehenden Ansprüche,
**dadurch gekennzeichnet,**
**dass** die aktuellen Betriebsinformationen (8) Informationen zu einem Status eines Gefahrenwarnsystems umfassen und bei Auftreten einer Gefahrenwarnung die Intensität der Massage der Massageeinheiten (2-1 bis 2-n) schlagartig verringert wird.

13. Verfahren nach Anspruch 1,
**dadurch gekennzeichnet,**
**dass** der Sitz als Fahrersitz (3) angesteuert wird, wobei die Massageeinheiten (2-1 bis 2-n) zur Massage eines Fahrzeugführers (12) angesteuert werden und die Intensität der Massage der Massageeinheiten (2-1 bis 2-n) bei Auftreten einer anhand der aktuellen Betriebsinformationen (8) erkennbaren, für den Fahrzeugführer (12) monotonen und/oder müdigkeitsfördernden Situation erhöht wird.

14. Sitzanordnung (1) für ein oder in einem Fahrzeug (10), insbesondere zur Durchführung eines Verfahrens gemäß einem der vorstehenden Ansprüche,
mit einem Sitz (3), welcher eine Anzahl von integrierten Massageeinheiten (2-1 bis 2-n) zur Massage eines Insassen aufweist,
wobei eine Vorrichtung oder eine Anschlussstelle vorgesehen ist, über welche die Massageeinheiten (2-1 bis 2-n) basierend auf einem Audio-Unterhaltungssignal (4) ansteuerbar sind,
wobei angepasst an aktuelle Betriebsinformationen (8) eines Fahrzeugs, welche das Auftreten einer für einen Fahrzeugführer potentiell mental beanspruchenden oder müdigkeitsfördernden Situation erkennen lassen, eine Intensität der auf dem Unterhaltungssignal (4) basierenden Massage der Massageeinheiten (2-1 bis 2-n) veränderbar ist.

15. Sitzanordnung nach Anspruch 14,
**dadurch gekennzeichnet,**
**dass** der Sitz einen Fahrersitz (3) bildet, wobei die Massageeinheiten (2-1 bis 2-n) zur Massage eines Fahrzeugführers (12) vorgesehen sind und wobei die Intensität der Massage der Massageeinheiten (2-1 bis 2-n) bei Auftreten einer anhand der aktuellen Betriebsinformationen (8) erkennbaren, für den Fahrzeugführer (12) potentiell beanspruchenden Situation verringerbar und/oder bei Auftreten einer anhand der aktuellen Betriebsinformationen (8) erkennbaren, für den Fahrzeugführer (12) monotonen und/oder müdigkeitsfördernden Situation erhöhbar ist.

## Claims

1. A method for controlling massage units (2-1 to 2-n) of a massage apparatus arranged in a seat (3) in a vehicle (10) for massaging an occupant, comprising the steps of:
controlling (S2) massage units (2-1 to 2-n) integrated in the seat (3) based on an audio entertainment signal (4); and
altering (S4) an intensity of the massage provided by the massage units (2-1 to 2-n) based on the entertainment signal (4), adapted to current operating information (8) of the vehicle (10), which indicates the occurrence of a potentially mentally demanding or fatigue-promoting situation for a vehicle driver.

2. The method according to claim 1, **characterized in that** the seat is actuated as a driver's seat (3), wherein the massage units (2-1 to 2-n) are actuated for massaging a vehicle driver (12) and the intensity of the massage of the massage units (2-1 to 2-n) is reduced on occurrence of a situation which is recognizable on the basis of the current operating information (8) and is potentially stressful for the vehicle driver (12).

3. The method according to claim 2, **characterized in that** the intensity of the massage is increased again following a situation which is potentially stressful for the vehicle driver (12).

4. The method according to claim 2, **characterized in that**, if a situation occurs which is potentially stressful for the vehicle driver (12), or following a situation which is potentially stressful for the vehicle driver (12), a request is made to the vehicle driver (12) as to whether the intensity of the massage is to be increased again, and in response to a confirmation of the request, the intensity of the massage is increased.

5. The method according to any of the preceding claims, **characterized in that** the current operating information (8) comprises regarding a gear currently engaged, the intensity of the massage being reduced when a reverse gear is engaged.

6. The method according to any of the preceding claims, **characterized in that** the current operating information (8) comprises information regarding a gear currently engaged, the intensity of the massage being reduced when a reverse gear is engaged.

7. The method according to any of the preceding claims, **characterized in that** the current operating information (8) comprises navigation information of the vehicle and/or regarding current traffic messages and/or regarding a surrounding of the vehicle (10), including being detected by a sensor, wherein a traffic situation which potentially requires increased attention or a situation including a potentially narrow or unclear lane being based on the navigation information and/or for current traffic messages and/or for the current surrounding of the vehicle and the intensity of the massage being reduced.

8. The method according to any of the preceding claims, **characterized in that** the current operating information (8) comprises information relating to a current driving state and/or to a current surrounding of the vehicle (10), a potentially dangerous driving maneuver, including an overtaking, evasive or emergency braking maneuver, being detected using the current driving state and/or surrounding information, and the intensity of the massage being reduced.

9. The method according to any of the preceding claims, **characterized in that** the current operating information (8) comprises information regarding an operating behavior when operating the vehicle (10), including a situation with potential distraction of a vehicle driver (12) based on the information regarding the operating behavior.

10. The method according to any of the preceding claims, **characterized in that** when the intensity is reduced, the massage of the massage units (2-1 to 2-n) is continued with reduced intensity or the intensity is reduced to zero and the massage is interrupted or terminated.

11. The method according to claim 10, **characterized in that** reducing the intensity of the massage of the massage units (2-1 to 2-n) is performed with a slow drop in intensity.

12. The method according to any of the preceding claims, **characterized in that** current operating information (8) includes information regarding a status of a hazard warning system and, if a hazard warning occurs, the intensity of the massage of the massage units (2-1 to 2-n) is abruptly reduced.

13. The method according to claim 1, **characterized in that** the seat is actuated as a driver's seat (3), the massage units (2-1 to 2-n) being actuated to massage a vehicle driver (12) and the intensity of the massage of the massage units (2-1 to 2-n) being increased in the event of a situation based on the current operating information and which is monotonous and/or promotes fatigue for the vehicle driver (12) and which can be recognized by means of the current operating information (8).

14. A seat arrangement (1) for or in a vehicle (10), in particular for carrying out a method in according to any of the preceding claims, comprising a seat (3) having a plurality of integrated massage units (2-1 to 2-n) for massaging an occupant, wherein a device or a connection point is provided via which the massage units (2-1 to 2-n) can be controlled based on an audio entertainment signal (4), wherein an intensity of the massage of the massage units (2-1 to 2-n) based on the entertainment signal (4) can be varied in accordance with current operating information (8) of a vehicle which indicates the occurrence of a potentially mentally demanding or fatigue-promoting situation for a vehicle driver.

15. The eat arrangement according to claim 14, **characterized in that** the seat forms a driver's seat (3) and the massage units (2-1 to 2-n) are configured to provide a massage to a vehicle driver (12), and wherein an intensity of the massage can be reduced when a situation which can be detected on the basis of the current operating information (8) and is potentially stressful for the vehicle driver (12) occurs and/or can be increased when a situation which can be detected based on the current operating information (8) and is monotonous and/or promotes fatigue for the vehicle driver (12) occurs.

## Revendications

1. Procédé pour commander des unités de massage (2-1 à 2-n) d'un dispositif de massage placé dans un siège (3) d'un véhicule (10) pour masser un occupant, comprenant les étapes de procédé suivantes :
commander (S2) les unités de massage (2-1 à 2-n) intégrées dans le siège (3) sur la base d'un signal de divertissement audio (4)
changer (S4) une intensité du massage fourni par les unités de massage (2-1 à 2-n) sur la base du signal de divertissement (4) adapté aux informations de fonctionnement actuelles (8) du véhicule (10), qui indique l'apparition d'une situation potentiellement exigeante mentalement ou favorisant la fatigue pour un conducteur du véhicule.

2. Le procédé selon la revendication 1, **caractérisé en ce que** le siège est actionné en tant que siège de conducteur (3), les unités de massage (2-1 à 2-n) étant actionnées pour masser un conducteur de véhicule (12) et l'intensité du massage des unités de massage (2-1 à 2-n) étant réduite lorsqu'une situation potentiellement stressante ou fatigante pour le conducteur du véhicule (12) est détectée sur la base des informations de fonctionnement actuelles (8).

3. Le procédé selon la revendication 2, **caractérisé en ce que** l'intensité du massage est à nouveau augmentée à la suite d'une situation potentiellement stressante pour le conducteur du véhicule (12).

4. Le procédé selon la revendication 2, **caractérisé en ce que** lorsqu'une situation potentiellement stressante pour le conducteur du véhicule (12) se produit ou suite à une situation potentiellement stressante pour le conducteur du véhicule (12), un interrogatoire dirigé vers le conducteur du véhicule (12) est effectué pour savoir si l'intensité du massage doit être augmentée à nouveau, et lorsque l'interrogatoire est confirmé, l'intensité du massage est augmentée.

5. Le procédé selon quelconque des revendications ci-dessus, **caractérisée en ce que** les informations de fonctionnement actuelles (8) comprennent des informations sur un rapport actuellement engagé, l'intensité du massage étant réduite lorsqu'un rapport de marche arrière est engagé.

6. Le procédé selon quelconque des revendications ci-dessus, **caractérisé en ce que** les informations de fonctionnement actuelles (8) comprennent des informations sur un étage d'essuie-glace actuellement engagé, l'intensité du massage étant réduite lorsque l'étage d'essuie-glace le plus élevé est engagé.

7. Le procédé selon quelconque des revendications ci-dessus, **caractérisé en ce que** les informations de fonctionnement actuelles (8) comprennent des informations sur la navigation du véhicule et/ou sur des messages de circulation actuels et/ou sur un environnement actuel du véhicule, en particulier un environnement qui est détecté de manière sensorielle, les informations actuelles sur la navigation et/ou sur des messages de circulation actuels et/ou sur l'environnement actuel du véhicule (10) étant utilisées pour identifier une situation de circulation qui nécessite une attention potentiellement accrue ou une situation avec une voie potentiellement étroite ou peu claire, et l'intensité du massage étant réduite.

8. Le procédé selon quelconque des revendications ci-dessus, **caractérisé en ce que** les informations de fonctionnement actuelles (8) comprennent des informations sur un état de conduite actuel et/ou sur un environnement actuel du véhicule (10), une manoeuvre de conduite potentiellement dangereuse, en particulier une manoeuvre de dépassement, d'évitement ou de freinage d'urgence, étant détectée sur la base des informations actuelles sur l'état de conduite et/ou l'environnement, et l'intensité du massage étant réduite.

9. Le procédé selon quelconque des revendications ci-dessus, **caractérisé en ce que** les informations de fonctionnement actuelles (8) comprennent des informations sur un comportement de fonctionnement actuel lors de la conduite du véhicule (10), une situation avec une distraction potentielle du conducteur du véhicule (12) étant détectée sur la base des informations sur le comportement de fonctionnement et l'intensité du massage étant réduite.

10. Le procédé selon quelconque des revendications ci-dessus, **caractérisée en ce que** lorsque l'intensité est réduite, le massage des unités de massage (2-1 à 2-n) est poursuivi avec une intensité réduite ou l'intensité est réduite à zéro et le massage est interrompu ou terminé.

11. Le procédé selon la revendication 10, **caractérisé en ce que** la réduction de l'intensité du massage des unités de massage (2-1 à 2-n) est effectuée avec une lente diminution de l'intensité du massage.

12. Le procédé selon quelconque des revendications ci-dessus, **caractérisé en ce que** les informations de fonctionnement actuelles (8) comprennent des informations sur un état d'un système d'avertissement de danger et lorsqu'un avertissement de danger se produit, l'intensité du massage des unités de massage (2-1 à 2-n) est brusquement réduite.

13. Le procédé selon la revendication 1, **caractérisé en ce que** le siège est actionné en tant que siège de conducteur (3), les unités de massage (2-1 à 2-n) étant actionnées pour masser un conducteur du véhicule (12) et l'intensité du massage des unités de massage (2-1 à 2-n) étant augmentée lorsqu'une situation monotone et/ou favorisant la fatigue du conducteur du véhicule (12) se produit, qui peut être détectée sur la base des informations de fonctionnement actuelles (8).

14. Un ensemble de siège (1) pour ou dans un véhicule (10), en particulier pour la mise en oeuvre d'un procédé selon quelconque des revendications ci-dessus,
avec un siège (3) qui présente plusieurs unités de massage intégrées (2-1 à 2-n) pour masser un occupant,
dans lequel il est prévu un dispositif ou un point de raccordement par lequel les unités de massage (2-1 à 2-n) peuvent être activées sur la base d'un signal de divertissement audio (4),
dans lequel l'intensité du massage des unités de massage (2-1 à 2-n) sur las base du signal de divertissement (4) peut être modifiée en fonction des informations de fonctionnement actuelles (8) d'un véhicule qui indique l'apparition d'une situation potentiellement exigeante sur le plan mental ou favorisant la fatigue du conducteur du véhicule.

15. L'ensemble de siège selon la revendication 14, **caractérisé en ce que** le siège forme un siège de conducteur (3), les unités de massage (2-1 à 2-n) étant prévues pour masser un conducteur du véhicule (12) et l'intensité du massage des unités de massage (2-1 à 2-n) pouvant être réduite en cas d'apparition d'une situation reconnaissable sur la base des informations de fonctionnement actuelles (8) et potentiellement stressante pour le conducteur du véhicule (12) et/ou pouvant être augmentée en cas d'apparition d'une situation reconnaissable sur la base des informations de fonctionnement actuelles (8) et monotone et/ou favorisant la fatigue du conducteur du véhicule (12).
